# EUROPEAN PATENT APPLICATION

(11) **EP 1 174 646 A2**
(43) Date of publication of application: **23.01.2002**
(21) Application number: 01103669.6
(22) Date of filing: 23.02.2001
(51) Int. Cl.: F16H 61/04, F16H 61/10

(54) **Automatic transmission control method and automatic transmission controller**

(30) Priority: 17.07.2000 JP 2000216128
(71) Applicant: Hitachi, Ltd., Chiyoda-ku, Tokyo 101-8010 (JP)
(72) Inventor: Ozaki, Naoyuki, Hitachi, Ltd., Int. Prop. Gp., Chiyoda-ku, Tokyo 100-8220 (JP); Matsumura, Tetsuo, Hitachi, Ltd., Int. Prop. Gp., Chiyoda-ku, Tokyo 100-8220 (JP); Minowa, Toshimichi, Hitachi, Ltd., Int. Prop. Gp., Chiyoda-ku, Tokyo 100-8220 (JP); Okada, Takashi, Hitachi, Ltd., Int. Prop. Gp., Chiyoda-ku, Tokyo 100-8220 (JP); Ochi, Tatsuya, Hitachi, Ltd., Int. Prop. Gp., Chiyoda-ku, Tokyo 100-8220 (JP)
(74) Representative: Beetz & Partner Patentanwälte

(57) **Abstract**

An automatic transmission controller and method therefor, comprising: a plurality of torque transmission means (25, 16, 19) provided between an input shaft (4) and an output shaft (9) of a gear-drive transmission, so that at least one gear ratio of the torque transmission means is formed by a friction clutch (25) while the other gear ratios of the torque transmission means are formed by dog clutches (16, 19), and the friction clutch (25) is controlled when gearshifting is carried out from one gear ratio to another gear ratio; wherein gearshifting time is controlled to be shorter when a depress stroke of an accelerator pedal increases after a gearshifting start request, than that when the depress stroke of the accelerator pedal is fixed.

## Description

### BACKGROUND OF THE INVENTION

The present invention relates to an automatic transmission control method and an automatic transmission controller in a vehicle.

A vehicle mounted with a manual shifted transmission is superior in fuel economy to a vehicle mounted with an automatic transmission with a torque converter. However, it is difficult to operate a clutch and an accelerator in coordination at the start of the vehicle. If the vehicle fails to operate the clutch and the accelerator in coordination at the start of the vehicle, there may arise a so-called surging phenomenon. That is, a great shock may be generated when the clutch is just engaged, or the engine speed may increase suddenly if the clutch pressure is insufficient. In addition, for example, if the clutch is to be engaged suddenly before the engine speed reaches a sufficient value, or if the vehicle is started on an uphill slope, the engine may stall.

To solve such problems, recently, there has been developed an automatic MT (manual transmission) which is a system for automatically operating a clutch and a gear change by use of a mechanism of a manual transmission.

### SUMMARY OF THE INVENTION

Under the control of gearshifting by a conventional automatic MT, acceleration may fluctuate due to the release/engagement operation of a start clutch to make a driver or passengers feel uncomfortable.

There has been also proposed an automatic transmission in which an assist clutch is provided in a conventional automatic MT so as to transmit torque during gearshifting. Under the control of gearshifting by the automatic MT provided with such an assist clutch, if gearshifting time is short even though an accelerator pedal is depressed constantly during gearshifting, a driver may be given a shock as if the vehicle starts suddenly (a feeling of push-up). Further, when the accelerator pedal is depressed during gearshifting, gearshifting carried out in an ordinary gearshifting time cannot give the driver a sense of acceleration. Thus, a sense of stretchness or stumble is given to the driver so that a request of the driver for acceleration cannot be satisfied.

Further, under the control of gearshifting by the automatic MT provided with the assist clutch, when an operation of gearshifting is made during engagement with the start clutch, the torque balance in the engagement of the assist clutch may be destroyed so that a shock is given to the driver.

Moreover, under the control of gearshifting by the automatic MT provided with the assist clutch, when the driver steps up on the accelerator or releases the accelerator during the control of gearshifting so as to cross a gearshifting line in a shift diagram, engagement with an optimum gear cannot be carried out immediately. Thus, the vehicle cannot be shifted into an optimum driving condition immediately.

It is an object of the present invention to provide an automatic transmission control method and an automatic transmission controller which can moderate a shock generated when a clutch is engaged or released during gearshifting.

It is another object of the present invention to provide an automatic transmission control method which can satisfy a request of a driver for acceleration without giving the driver a feeling of stretchness or stumble during gearshifting.

It is another object of the present invention to provide an automatic transmission control method which can prevent a shock from being given to the driver due to the torque balance destroyed when an assist clutch is engaged by the operation of gearshifting using the assist clutch while a start clutch is engaged.

It is further another object of the present invention to provide an automatic transmission control method in which, when the driver steps up on the accelerator or releases the accelerator during the control of gearshifting so as to cross a gearshifting line in a shift diagram, engagement with an optimum gear is carried out immediately so that the vehicle can be shifted into an optimum driving condition immediately.

To attain one of the foregoing objects, according to the present invention, there is provided an automatic transmission control method and a controller in which an assist clutch drive gear is engaged with a driving wheel output shaft through an assist clutch in response to a gearshifting command, and thereafter a plurality of dog clutches are released/engaged to change over gearshiting. In this method and controller, when the depress stroke of an accelerator pedal changes after the gearshifting command is issued and before gearshifting is finished, gearshifting time is set on the basis of the depress stroke of the accelerator pedal and the engine speed.

With such a configuration, when the accelerator pedal is depressed during gearshifting, gearshifting is carried out in a shorter gearshifting time than an ordinary one. Thus, a request of a driver for acceleration can be satisfied without giving a feeling of stretchness or stumble to the driver.

To attain another object, according to the present invention, there is provided an automatic transmission control method in which an assist clutch drive gear is engaged with a driving wheel output shaft through an assist clutch in response to a gearshifting command, and thereafter a plurality of dog clutches are released/engaged to change over gearshiting. In this method, when the gearshifting command is issued during the period after the engagement of the first clutch is started and before the engagement is completed, a gearshifting operation by using the assist clutch is not carried out.

With such a configuration, a gearshifting operation by using the assist clutch is not carried out during the engagement of the start clutch. Thus, it is possible to prevent a shock from being given to the driver due to the torque balance destroyed when the assist clutch is engaged.

To attain a further object, according to the present invention, there is provided an automatic transmission control method in which an assist clutch drive gear is engaged with a driving wheel output shaft through an assist clutch in response to a gearshifting command, and thereafter a plurality of dog clutches are released/engaged to change over gearshiting. In this method, during the period after a gearshifting operation is started in response to the gearshifting command and before the gearshifting operation is completed, when a new gearshifting command to make a gear ratio different from the gear ratio corresponding to the first-mentioned gearshifting command, a gearshifting operation to make the gear ratio corresponding to the new gearshifting command is carried out.

With such a configuration, when the driver steps up on the accelerator or releases the accelerator during the control of gearshifting so as to cross a gearshifting line in a shift diagram, engagement with an optimum gear is carried out immediately. Thus, the vehicle can be shifted into an optimum driving condition immediately.

### BRIEF DESCRIPTION OF THE DRAWINGS

Fig. 1 is a view showing the whole configuration of an automatic transmission according to an embodiment of the present invention;
Fig. 2 is a view showing the configuration of an assist clutch control unit shown in Fig. 1;
Fig. 3 is a view showing the configuration of a gearshifting time setting unit shown in Fig. 2;
Fig. 4 is a view showing the configuration of an assist clutch transmission torque FF (feed forward) command setting unit shown in Fig. 2;
Fig. 5 is a view showing the configuration of an assist clutch transmission torque FF command operation unit A shown in Fig. 4;
Fig. 6 is a view showing the characteristics of respective assist clutch transmission torque FF command values shown in Fig. 4 before and after a dog clutch is released/engaged;
Fig. 7 is a view showing the configuration of an aimed revolution speed trajectory setting unit shown in Fig. 2;
Fig. 8 is a view showing the configuration of an assist clutch transmission torque FB (feedback) command setting unit shown in Fig. 2;
Fig. 9 is a time chart of signals for control to moderate a feeling of shock when a clutch is engaged/released during gearshifting;
Fig. 10 is a flow chart for control to moderate a feeling of shock when a clutch is engaged/released during gearshifting;
Fig. 11 is a detailed flow chart of processing for controlling an assist clutch during the engagement of a dog clutch in the control flow chart shown in Fig. 10;
Fig. 12 is a detailed flow chart of processing for controlling the assist clutch during the release of the dog clutch in the control flow chart shown in Fig. 10;
Fig. 13 is a flow chart of processing for setting gearshifting time in the control flow chart shown in Fig. 12;
Fig. 14 is a flow chart of processing for setting a feed forward command value of assist clutch transmission torque in the control flow chart shown in Fig. 12;
Fig. 15 is a flow chart of processing for operating an assist clutch transmission torque FF command value 1 in the control flow chart shown in Fig. 14;
Fig. 16 is a characteristic diagram of an input shaft revolution speed change quantity for use in processing for operating an input shaft revolution speed change quantity shown in Fig. 15;
Fig. 17 is a characteristic diagram of an assist clutch transmission torque change quantity for use in processing for operating an assist clutch transmission torque change quantity shown in Fig. 15;
Fig. 18 is a detailed flow chart of processing for setting the trajectory of aimed revolution speed of a transmission input shaft in the control flow chart shown in Fig. 12;
Fig. 19 is a flow chart of control processing in which no gearshifting operation by using the assist clutch is carried out if a gearshifting command is issued during the period after the engagement of a start clutch is started and before the engagement is completed;
Fig. 20 is a flow chart for control when a driver steps up on an accelerator or releases the accelerator during the gearshifting control so as to cross a gearshifting line in a shift diagram; and
Fig. 21 is a flow chart for control when the driver steps up on the accelerator or releases the accelerator during the gearshifting control so as to cross a gearshifting line in a shift diagram.

### DESCRIPTION OF THE EMBODIMENTS

Embodiments of the present invention will be described below in detail with reference to the drawings.

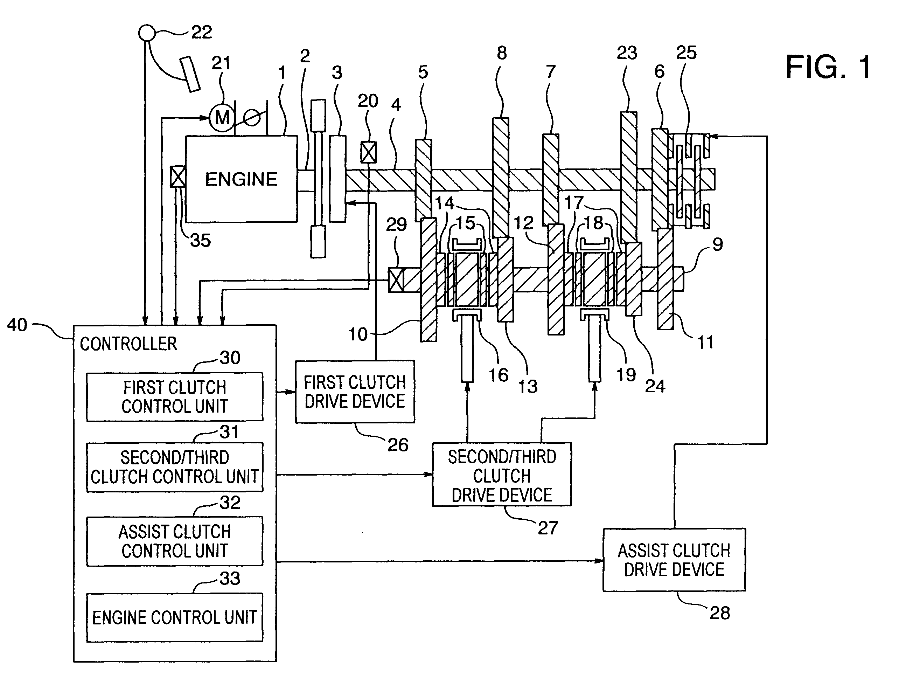

Fig. 1 is a view showing the configuration of an embodiment of a method for controlling an automatic transmission and a controller for the automatic transmission according to the present invention.

An engine 1 is provided with an engine speed sensor 35 for measuring the engine speed of the engine 1, and an electronically controlled throttle 21 for adjusting the engine torque. The depress stroke of an accelerator pedal is detected by an accelerator pedal sensor 22 provided in the accelerator pedal. A throttle opening command value is generated by a controller 40 in accordance with the output of the accelerator pedal sensor 22 and the conditions of a vehicle. The torque of the engine 1 can be controlled precisely by the electronically controlled throttle 21 in accordance with the throttle opening command value. The electronically controlled throttle 21 is provided in an intake pipe (not shown). A throttle opening signal is supplied from the electronically controlled throttle 21 to the controller 40. In this engine 1, the intake air flow is controlled by the electronically controlled throttle 21, and a fuel flow corresponding to the intake air flow is injected from a fuel injection system (not shown). In addition, in the engine 1, ignition is turned on by an ignition system (not shown) at the ignition timing determined from signals of the air/fuel ratio obtained from the air flow and the fuel flow, the engine speed, and so on. The fuel injection system may be of an intake port injection system in which fuel is injected into an intake port, or of a cylinder injection system in which fuel is injected directly into a cylinder. It is advantageous to use an engine which can reduce the fuel consumption and which is good at emission control, in consideration of a driving area (an area determined by engine torque and engine speed) required of the engine. In addition, the throttle opening of the electronically controlled throttle 21 is made up by the controller 40 on the basis of a signal designating the position of the accelerator pedal, which signal is supplied from the accelerator pedal sensor 22, and the driving conditions of the vehicle.

A first clutch 3 is provided on an engine output shaft 2 of the engine 1 so that the torque of the engine 1 can be transmitted to an input shaft 4. The first clutch 3 is a clutch mechanism for transmitting the torque of the engine to a transmission. For example, the first clutch 3 is a starting/ gearshifting clutch for use in engagement when the vehicle is started. In this case, a dry type single plate clutch or the like is used as the first clutch 3. A first drive gear (fifth-speed drive gear) 5, a second drive gear (second-speed drive gear) 8, a third drive gear (fourth-speed drive gear) 7 and a fourth drive gear (first-speed drive gear) 23 are fixedly attached to the input shaft 4. In addition, an assist clutch drive gear 6 is provided rotatably on the input shaft 4.

An actuator (not shown) driven by oil pressure, an actuator driven by an electric motor, or the like, is used for controlling the pressing force (clutch torque) of the first clutch 3. This actuator is controlled by a first clutch control unit 30 received in the controller 40. By adjusting the pressing force (clutch torque) of the first clutch 3, power transmission from the engine output shaft 2 of the engine 1 to the input shaft 4 can be turned on/off, or transmission can be carried out in a slipping state. A sensor 20 for detecting the revolution speed of the input shaft 4 is provided near the input shaft 4.

On the other hand, a first driven gear (fifth-speed driven gear) 10 having a synchronizer ring 14, a second driven gear (second-speed driven gear) 13 having a synchronizer ring 14, a third driven gear (fourth-speed driven gear) 12 having a synchronizer ring 17, a fourth driven gear (first-speed driven gear) 24 having a synchronizer ring 17 are provided rotatably on a transmission output shaft 9. In addition, an assist clutch driven gear 11 is fixedly attached to the transmission output shaft 9.

The first driven gear 10 is in gear with the first drive gear 5. The second driven gear 13 is in gear with the second drive gear 8. The third driven gear 12 is in gear with the third drive gear 7. The fourth driven gear 24 is in gear with the fourth drive gear 23. In addition, the assist clutch driven gear 11 is in gear with the assist clutch drive gear 6.

A second clutch (dog clutch) 16 having a synchro-mesh gear 15 is provided between the first driven gear 10 and the second driven gear 13. The second clutch 16 selects either the first driven gear 10 or the second driven gear 13 to engage the selected driven gear with the transmission output shaft 9. Each of the first driven gear 10 and the second driven gear 13 is provided with a stopper (not shown) so as not to move in the axial direction of the transmission output shaft 9. In addition, the second clutch 16 has grooves (not shown) intermeshing with a plurality of grooves (not shown) provided in the transmission output shaft 9. Thus, the second clutch 16 is designed to be able to move in the axial direction of the transmission output shaft 9 but to be limited in movement in the rotation direction of the transmission output shaft 9. Accordingly, the revolution torque transmitted from the first drive gear 5 or the second drive gear 8 to the first driven gear 10 or the second driven gear 13 is transmitted to the second clutch 16, and further transmitted to the transmission output shaft 9 through the second clutch 16.

A third clutch (dog clutch) 19 having a synchro-mesh gear 18 is provided between the third driven gear 12 and the fourth driven gear 24. The third clutch 19 selects either the third driven gear 12 or the fourth driven gear 24 to engage the selected driven gear with the transmission output shaft 9. Each of the third driven gear 12 and the fourth driven gear 24 is provided with a stopper (not shown) so as not to move in the axial direction of the transmission output shaft 9. In addition, similarly to the second clutch 16, the third clutch 19 has grooves (not shown) intermeshing with a plurality of grooves (not shown) provided in the transmission output shaft 9. Thus, the third clutch 19 is designed to be able to move in the axial direction of the transmission output shaft 9 but to be limited in movement in the rotation direction of the transmission output shaft 9. Accordingly, the revolution torque transmitted from the third drive gear 7 or the fourth drive gear 23 to the third driven gear 12 or the fourth driven gear 24 is transmitted to the third clutch 19, and further transmitted to the transmission output shaft 9 through the third clutch 19.

In addition, an assist clutch (friction clutch) 25 is provided on the input shaft 4. An assist clutch drive gear 6 provided rotatably on the input shaft 4 is brought into gear with the input shaft 4 by the assist clutch 25. The assist clutch drive gear 6 is provided with a stopper (not shown) so as not to move in the axial direction of the input shaft 4. In addition, the assist clutch 25 is designed to transmit power by friction force generated by pressing a clutch plate provided on the assist clutch 25 against a clutch plate provided on the input shaft 4. Accordingly, the revolution torque transmitted from the input shaft 4 to the assist clutch drive gear 6 through the assist clutch 25 is transmitted to the transmission output shaft 9 through the assist clutch driven gear 11. Thus, in order to transmit the revolution torque of the input shaft 4 to the assist clutch drive gear 6, it is necessary to transmit the torque in the condition that the assist clutch 25 is driven to slip the assist clutch drive gear 6 and the input shaft 4 on each other or engage them with each other. The assist clutch 25 can be driven by an actuator driven by oil pressure, an electric actuator such as an electric motor, or the like. In the case of the actuator driven by oil pressure, the oil pressure is controlled so that the engagement force of the assist clutch 25 can be adjusted. Thus, the revolution torque of the input shaft 4 can be transmitted to the transmission output shaft 9 through the assist clutch drive gear 6 and the assist clutch driven gear 11 by torque transmission in the condition that the assist clutch 25 is slipping.

Further, in order to transmit the revolution torque of the input shaft 4 to the second clutch 16, it is necessary to move the second clutch 16 in the axial direction of the transmission output shaft 9 so as to make the second clutch 16 engage with the first driven gear 10 or the second driven gear 13. In other words, to make the first driven gear 10 or the second driven gear 13 engage with the transmission output shaft 9, the second clutch 16 is moved. To move the second clutch 16, an actuator driven by oil pressure, an electric actuator such as an electric motor, or the like, is used. By adjusting the quantity of movement of the stroke of the second clutch 16, the revolution torque of the input shaft 4 can be transmitted to the transmission output shaft 9 through the second clutch 16. In addition, the revolution speed of the transmission output shaft 9 is detected by a sensor 29 provided near the transmission output shaft 9.

Further, in order to transmit the revolution torque of the input shaft 4 to the third clutch 19, it is necessary to move the third clutch 19 in the axial direction of the transmission output shaft 9 so as to engage the third clutch 19 with the third driven gear 12 or the fourth driven gear 24. To engage the third driven gear 12 or the fourth driven gear 24 with the transmission output shaft 9, the third clutch 19 is moved. To move the third clutch 19, an actuator driven by oil pressure, an electric actuator such as an electric motor, or the like, is used. By adjusting the quantity of movement of the stroke of the third clutch 19, the revolution torque of the input shaft 4 can be transmitted to the transmission output shaft 9 through the third clutch 19.

The driving of the second and third clutches 16 and 19 by the actuator is controlled by a second/third clutch drive device 27 on the basis of a command from a second/third clutch control unit 31 received in the controller 40. On the other hand, the driving of the assist clutch 25 by the actuator is controlled by an assist clutch drive device 28 on the basis of a command from an assist clutch control unit 32 received in the controller 40. The controller 40 can be implemented by a general computer including a CPU operating in accordance with a program, a memory storing a control program and data, an input/output control unit, and a bus interconnecting them.

The revolution torque from the input shaft 4 transmitted through the first drive gear 5, the second drive gear 8, the third drive gear 7, the fourth drive gear 23, the first driven gear 10, the second driven gear 13, the third driven gear 12 and the fourth driven gear 24 to the transmission output shaft 9 and then is transmitted to an axle through not-shown differential gears thereby to rotate not-shown driving wheels.

The actuator for driving the first clutch 3 controls the stroke of the first clutch 3 via the first clutch drive device 26. The actuator for driving the second clutch 16 and the actuator for driving the third clutch 19 control the strokes of the second and third clutch 16 and 19 via the second/third clutch drive device 27 respectively. The actuator for driving the assist clutch 25 controls the torque transmitted by the assist clutch 25 as follows. That is, the assist clutch drive device 28 presses the clutch plate of the assist clutch 25 against the clutch plate of the input shaft 4 on the basis of a control command from the assist clutch control unit 32. On the other hand, the throttle opening of the electronically controlled throttle 21 is controlled by an engine control unit 33.

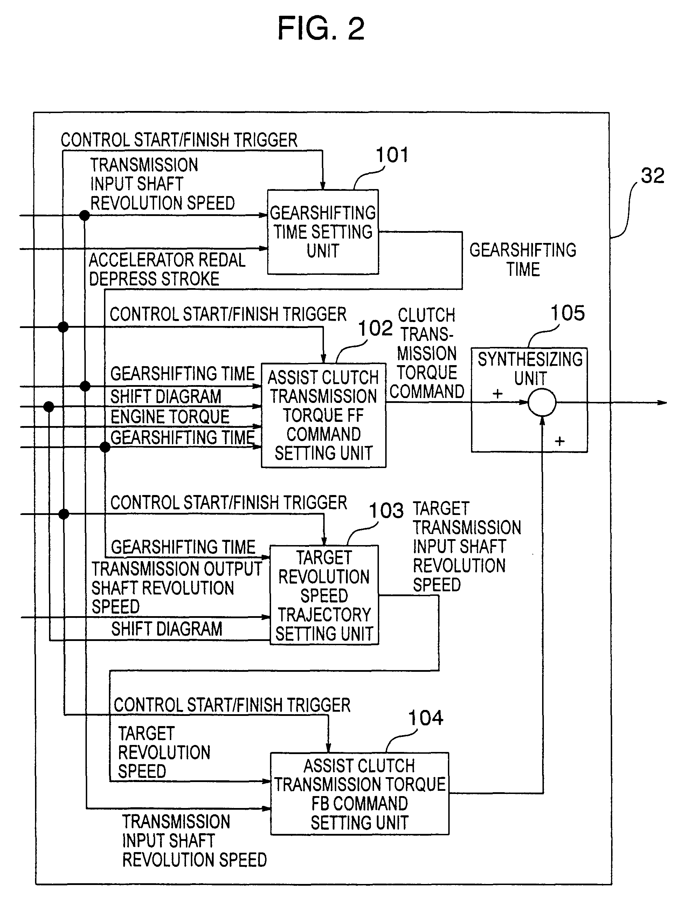

The assist clutch control unit 32 has a configuration as shown in Fig. 2. That is, the assist clutch control unit 32 is constituted by a gearshifting time setting unit 101, an assist clutch transmission torque FF (feed forward) command setting unit 102, a target revolution speed trajectory setting unit 103, an assist clutch transmission torque FB (feedback) command setting unit 104, and a synthesizing unit 105.

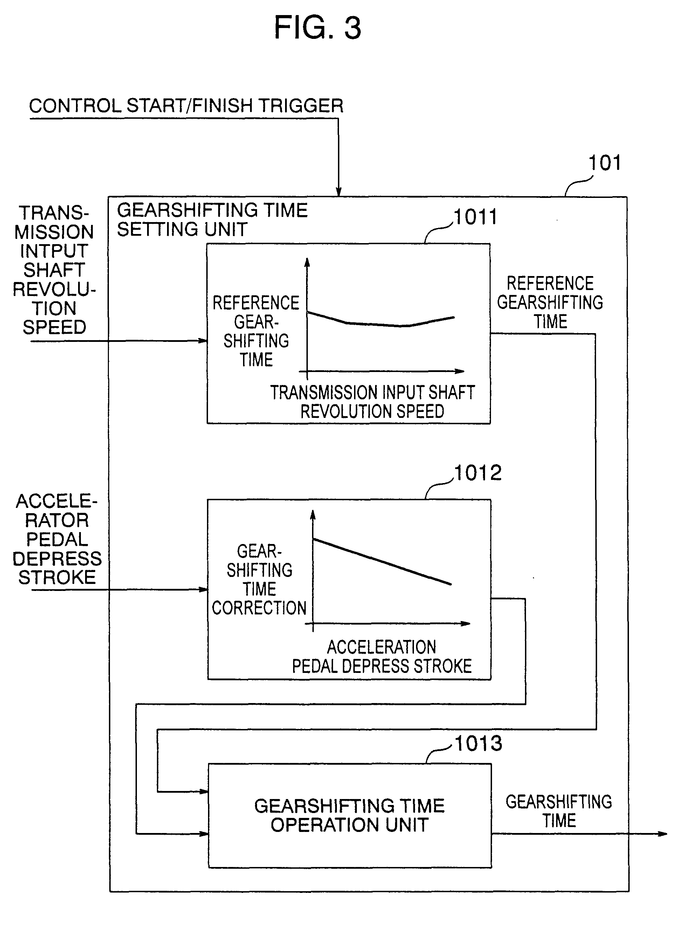

The gearshifting time setting unit 101 sets the time between the time at which engagement with the assist clutch 25 is started and the time at which the engagement is released. Fig. 3 shows the details of the gearshifting time setting unit 101. That is, when the revolution speed of the input shaft 4 of the transmission is supplied from the sensor 20 to the gearshifting time setting unit 101, reference gearshifting time is set by a reference gearshifting time setting unit 1011. The reference gearshifting time setting unit 1011 has a reference gearshifting time map predetermined in accordance with the revolution speed of the input shaft 4 of the transmission. The reference gearshifting time is set on the basis of the reference gearshifting time map, and supplied to a gearshifting time operation unit 1013. On the other hand, the accelerator pedal depress stroke is supplied from the accelerator pedal sensor 22 to the gearshifting time setting unit 101. Then, if a trigger (control start/finish trigger) issued in response to the release/engagement of the dog clutch (the second clutch 16 or the third clutch 19) is outputted, a correction value of the gearshifting time is set by a gearshifting time correcting unit 1012. The gearshifting time correcting unit 1012 has a gearshifting time correction map predetermined in accordance with the accelerator pedal depress stroke. The correction value of the gearshifting time is set on the basis of the gearshifting time correction map, and supplied to the gearshifting time operation unit 1013. In the gearshifting time operation unit 1013, a gearshifting time is determined on the basis of the reference gearshifting time set by the reference gearshifting time setting unit 1011 and the gearshifting time correction value set by the gearshifting time correcting unit 1012, and outputted as a gearshifting time between the time at which the engagement of the assist clutch 25 is started and the time at which the engagement is released.

The gearshifting time value outputted from the gearshifting time setting unit 101 is supplied to the assist clutch transmission torque FF command setting unit 102 and the target revolution speed trajectory setting unit 103.

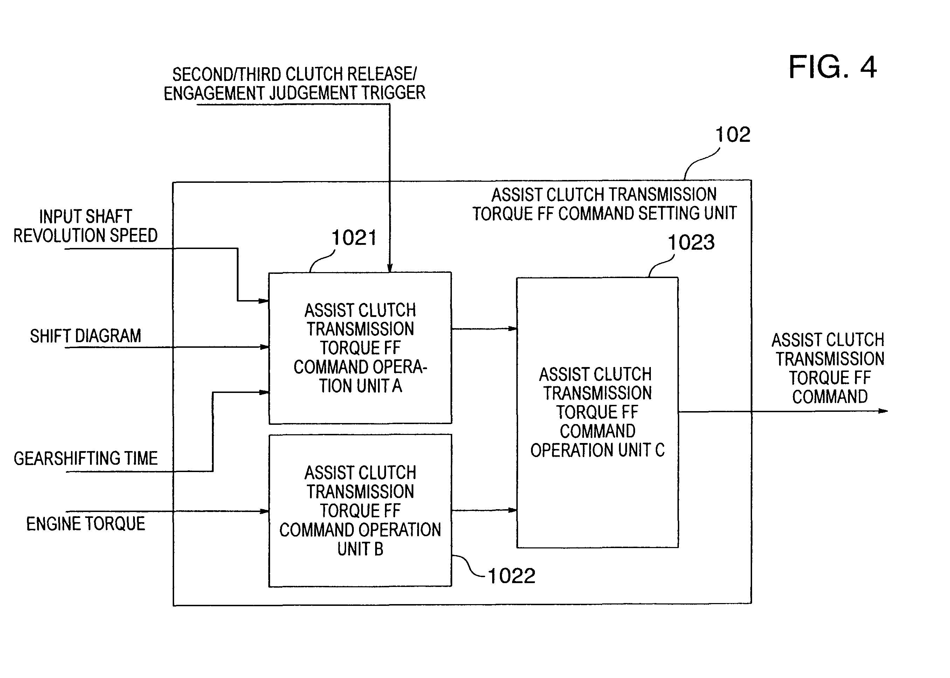

The assist clutch transmission torque FF command setting unit 102 sets a feed forward command value for the assist clutch transmission torque. Fig. 4 shows the details of the assist clutch transmission torque FF command setting unit 102. That is, the assist clutch transmission torque FF command setting unit 102 is constituted by an assist clutch transmission torque FF command operation unit A 1021, an assist clutch transmission torque FF command operation unit B 1022, and an assist clutch transmission torque FF command operation unit C 1023.

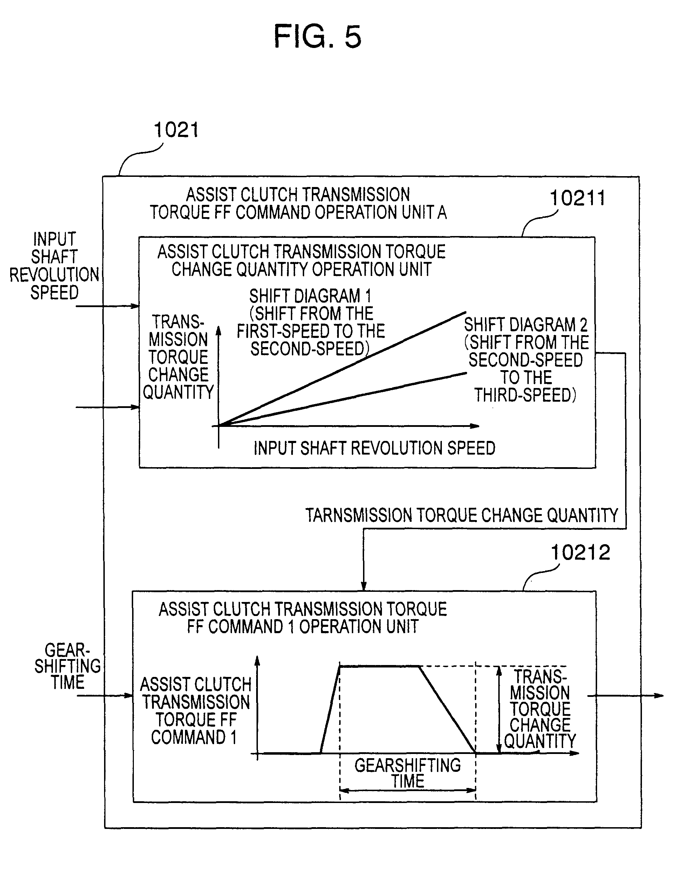

The assist clutch transmission torque FF command operation unit A 1021 has a configuration as shown in Fig. 5. That is, the revolution speed of the input shaft 4 of the transmission outputted from the sensor 20, and the shift diagram, for example, from the first-speed to the second-speed, from the second-speed to the third-speed, or the like, are supplied to the assist clutch transmission torque FF command operation unit A 1021. Further, when a trigger (control start/finish trigger) issued in response to the release/engagement of a dog clutch (the second clutch 16 or the third clutch 19) is supplied, an assist clutch transmission torque change quantity is set by an assist clutch transmission torque change quantity operation unit 10211. The assist clutch transmission torque change quantity operation unit 10211 has an assist clutch transmission torque change quantity map predetermined by the input shaft revolution speed and the shift diagram (shift from the first-speed to the second-speed, shift from the second-speed to the third-speed, or the like). The assist clutch transmission torque change quantity is obtained from the assist clutch transmission torque change quantity map, and supplied to an assist clutch transmission torque FF command 1 operation unit 10212.

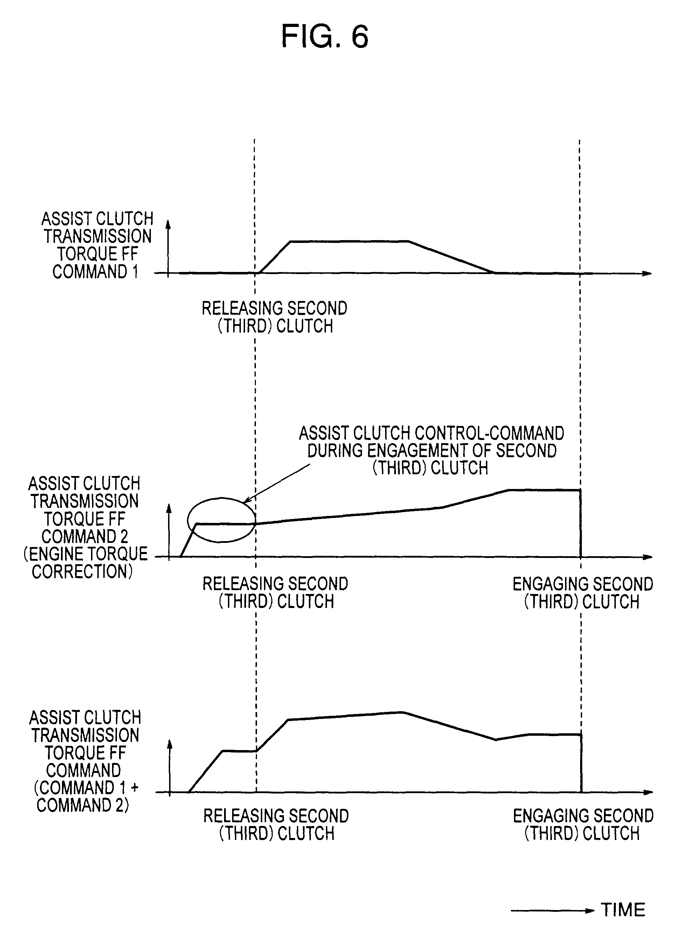

The assist clutch transmission torque FF command 1 operation unit 10212 operates and outputs an assist clutch transmission torque FF command value. When the gearshifting time outputted from the gearshifting time setting unit 101, and the assist clutch transmission torque change quantity outputted from the assist clutch transmission torque change quantity operation unit 10211 are supplied, the assist clutch transmission torque FF command 1 operation unit 10212 operates an assist clutch transmission torque FF command value 1 on the basis of these two supplied values, as shown in Fig. 6. Then, the assist clutch transmission torque FF command value 1 is supplied to the assist clutch transmission torque FF command operation unit C 1023.

On the other hand, when an engine torque value is supplied to the assist clutch transmission torque FF command operation unit B 1022, the assist clutch transmission torque FF command operation unit B 1022 supplies the assist clutch transmission torque FF command operation unit C 1023 with an assist clutch transmission torque FF command 2 defined by the engine torque value as shown in Fig. 6.

The assist clutch transmission torque FF command operation unit C 1023 calculates an assist clutch transmission torque FF command value as shown in Fig. 6, on the basis of the assist clutch transmission torque FF command value 1 supplied from the assist clutch transmission torque FF command operation unit A 1021 and on the basis of the assist clutch transmission torque FF command value 2 supplied from the assist clutch transmission torque FF command operation unit B 1022. Then, the assist clutch transmission torque FF command operation unit C 1023 supplies the assist clutch transmission torque FF command value to the synthesizing unit 105.

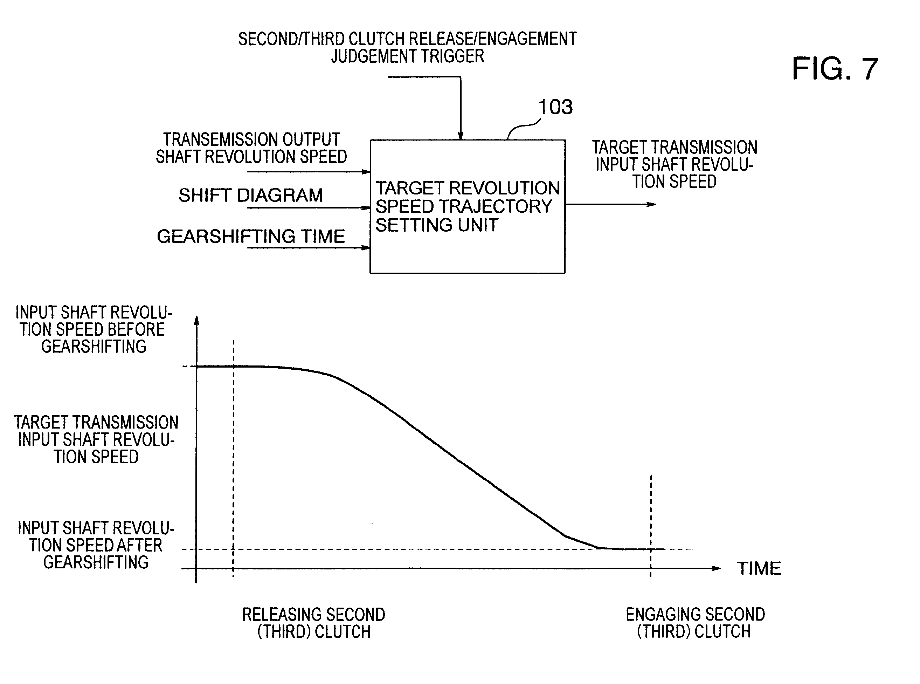

The revolution speed of the transmission output shaft 9 outputted from the sensor 29, the shift diagram (shift from the first-speed to the second-speed, shift from the second-speed to the third-speed, or the like), and the gearshifting time outputted from the gearshifting time setting unit 101 are supplied to the target revolution speed trajectory setting unit 103 as shown in Fig. 7. Then, when a trigger (control start/finish trigger) issued in response to the release/engagement of a dog clutch (the second clutch 16 or the third clutch 19) is supplied, the target revolution speed trajectory setting unit 103 sets the trajectory of the aimed revolution speed of the transmission input shaft 4 on the basis of the characteristic diagram of Fig. 7. The trajectory is supplied to the assist clutch transmission torque FB command setting unit 104.

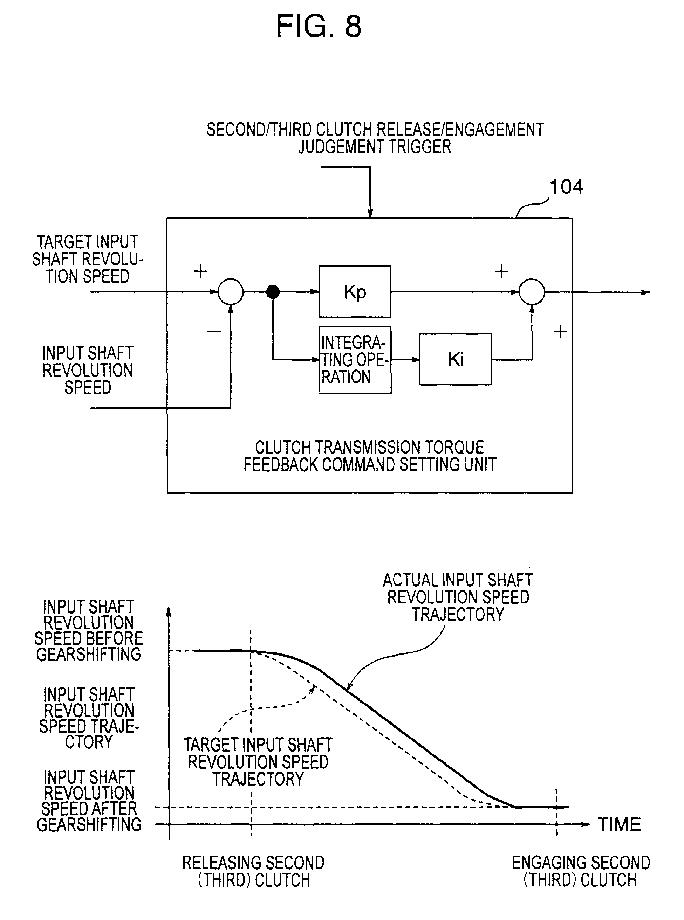

The assist clutch transmission torque FB command setting unit 104 sets a feedback command value for the assist clutch transmission torque. Fig. 8 shows the details of the assist clutch transmission torque FB command setting unit 104. That is, the target input shaft revolution speed of the transmission outputted from the target revolution speed trajectory setting unit 103 and the input shaft revolution speed of the transmission outputted from the sensor 20 are supplied to the assist clutch transmission torque FB command setting unit 104. Then, when a trigger (control start/finish trigger) issued in response to the release/engagement of a dog clutch (the second clutch 16 or the third clutch 19) is supplied, the assist clutch transmission torque FB command setting unit 104 calculates a deviation between the target input shaft revolution speed and the input shaft revolution speed. Thus, the assist clutch transmission torque FB command setting unit 104 obtains a feedback command value for the assist clutch transmission torque on the basis of this deviation, and supplies the feedback command value to the synthesizing unit 105.

In the synthesizing unit 105, the feedback command value for the assist clutch transmission torque supplied from the assist clutch transmission torque FB command setting unit 104 is added to the assist clutch transmission torque FF command value supplied from the assist clutch transmission torque FF command setting unit 102. An assist clutch command value for controlling the assist clutch 25 is generated thus, and supplied to the assist clutch drive device 28.

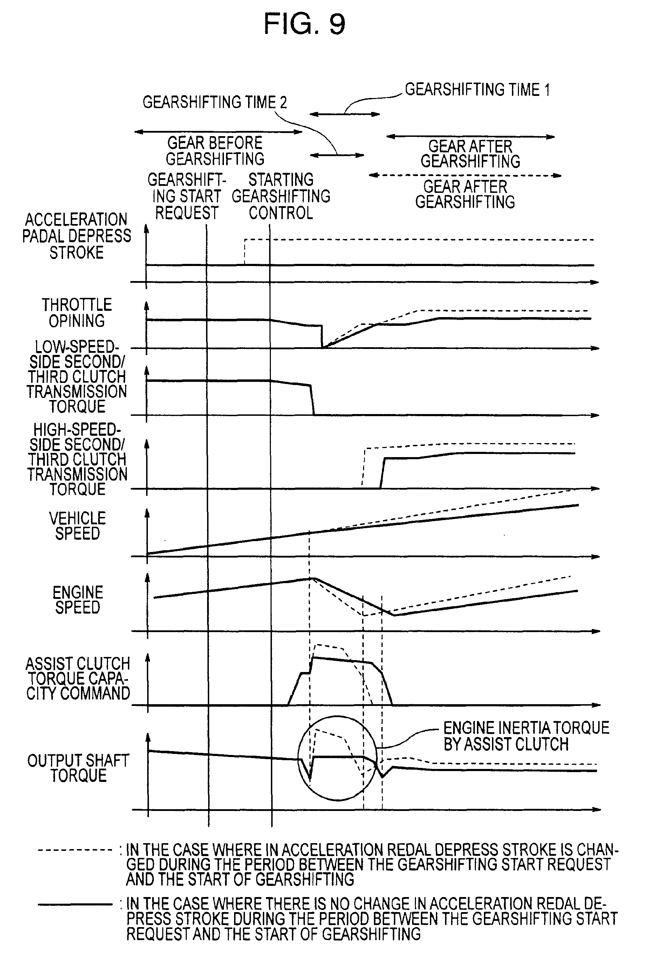

Next, the control of the automatic transmission in the case where the gearshifting time is changed by the accelerator pedal depress stroke changed during gearshifting will be described with reference to Figs. 9 to 18.

Fig. 9 shows a time chart of control when the accelerator pedal depress stroke is changed during gearshifting. In Fig. 9, the solid line designates the case where no change is caused in accelerator pedal depress stroke in the duration from a gearshifting request to the start of gearshifting. On the other hand, the dotted line designates the case where a change is caused in accelerator pedal depress stroke in the duration from a gearshifting request to the start of gearshifting.

First, description will be made about the case where no change is caused in accelerator pedal depress stroke in a predetermined time after a gearshifting request. If there is a gearshifting request, real gearshifting is started after a predetermined time has passed. In response to the start of gearshifting, the throttle opening is reduced. Then, the assist clutch 25 is driven so that torque transmission based on slipping is started (at the leading edge of an assist clutch torque capacity command). Then, the clutch pressing force of the assist clutch 25 is increased gradually (at a point of time when the assist clutch torque capacity command value takes a maximum value). The torque transmission based on the slipping of the assist clutch 25 is carried out so that the output shaft torque of the transmission output shaft 9 once drops down to a torque value corresponding to a gear ratio with which the assist clutch 25 is attached. After that, when the second clutch 16 (or the third clutch 19) on the low-speed side is released, the input shaft 4 and the output shaft 9 are released from engagement, and brought into a slipping state based on the assist clutch. Thus, the slipping transmission torque of the assist clutch 25 is given to the engine as a load so that the engine speed is lowered. The inertia torque generated due to the lowering of the engine speed at that time is transmitted to the transmission output shaft 9 through the assist clutch 25. As a result, the output shaft torque increases so that required torque is obtained and the vehicle speed is ensured. Therefore, after the low-speed-side dog clutch (the second clutch 16 or the third clutch 19) has been released, the vehicle is driven with the assist clutch drive gear 6 and the assist clutch driven gear 11 through the assist clutch 25. After that, when the ratio of the engine speed to the revolution speed of the transmission output shaft 9 reaches the complete shifted gear ratio, a high-speed-side dog clutch (the second clutch 16 or the third clutch 19) can be engaged. Then, the transmission output shaft 9 and the high-speed-side dog clutch are brought into engagement. The gearshifting time between the time at which the low-speed-side dog clutch is released and the time at which the high-speed-side dog clutch is engaged (the time between the time at which the assist clutch 25 is engaged and the time at which the assist clutch 25 is released) is controlled on the basis of predetermined ordinary gearshifting time.

On the other hand, description will be made about the case where a change is caused in accelerator pedal depress stroke in a predetermined time after a gearshifting request. Fig. 9 shows the case where a change is caused in accelerator pedal depress stroke (the accelerator pedal has been depressed) in a predetermined time from issuance of a gearshifting request to the start of gearshifting. That is, after issuing a gearshifting request, the driver has intended to accelerate his vehicle and depressed the accelerator pedal so as to change the position of the accelerator pedal.

In response to the start of gearshifting, the throttle opening is reduced. The transmission torque of a low-speed-side dog clutch (the second clutch 16 or the third clutch 19) is lowered. The assist clutch 25 is driven to start the torque transmission of the assist clutch 25 based on slipping. Thus, the pressing force of the clutch plate of the assist clutch 25 is increased gradually so as to increase the transmission torque capacity in the slipping condition. When the torque transmission of the assist clutch 25 is started, the torque of the output shaft 9 once drops down to a torque value corresponding to the gear ratio with which the assist clutch 25 is attached. When the low-speed-side dog clutch (the second clutch 16 or the third clutch 19) is released in the condition that the assist clutch 25 has reached a predetermined transmission torque capacity, the accelerator pedal depress stroke increasing in accordance with the depression of the accelerator pedal is read. Then, in order to shorten the gearshifting time, the pressing force of the clutch plate of the assist clutch 25 is made larger than that in the case of ordinary gearshifting. Thus, the torque loaded on the engine becomes larger than that under ordinary control, so that the lowering of the engine speed becomes large. As a result, the inertia torque generated due to the lowering of the engine speed becomes so large that the transmission torque of the assist clutch 25 becomes large and hence the output shaft torque of the transmission output shaft 9 becomes large. Then, when the engine speed drops down so that the ratio of the revolution speed of the input shaft 4 to the revolution speed of the output shaft 9 reaches the shifted gear ratio, the high-speed-side dog clutch (the second clutch 16 or the third clutch 19) can be engaged. The high-speed-side dog clutch is engaged, and the assist clutch 25 is released. Thus, the gearshifting time can be shortened in the case where a change is caused in accelerator pedal depress stroke from the time of issuance of a gearshifting request to the time of the start of gearshifting.

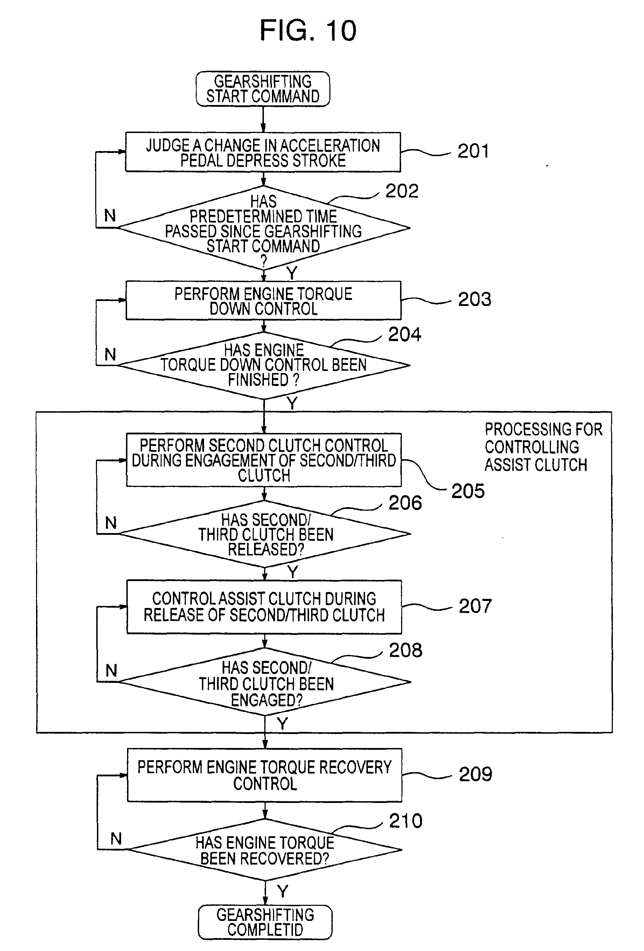

The gearshifting control will be described with reference to Figs. 10 to 18.

In Fig. 10, first, after a gearshifting request, in Step 201, it is concluded that a change has been caused in accelerator pedal depress stroke. In Step 202, a wait is made till a predetermined time has passed after issuance of the gearshifting request. If it is concluded in Step 202 that the predetermined time has passed after the gearshifting request, down control is carried out in Step 203. That is, in Step 203, the engine torque is lowered to a predetermined value. This down control is continued till the engine torque is lowered to the predetermined value. If it is concluded in Step 204 that the engine torque has been lowered to the predetermined value, processing for controlling the assist clutch 25 during the engagement of a dog clutch is carried out in Step 205.

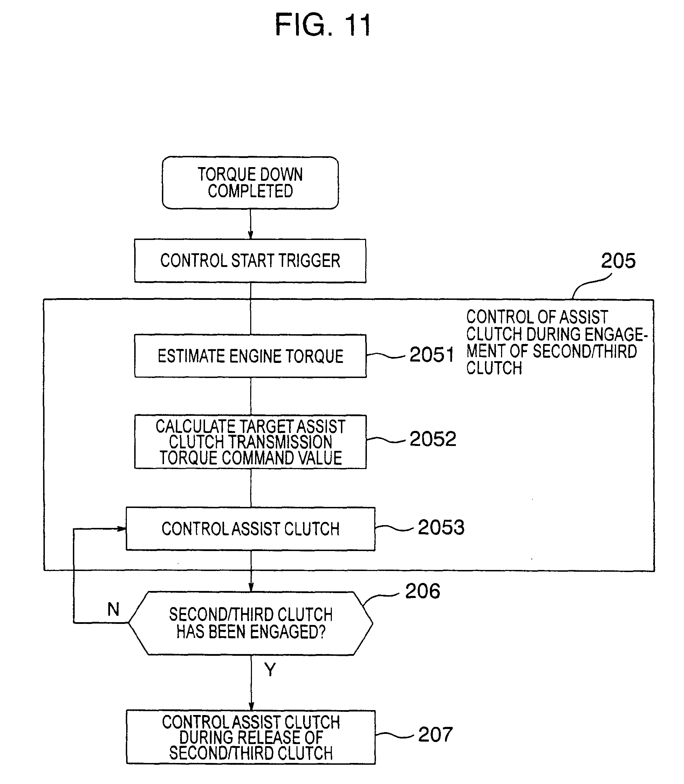

Fig. 11 shows the processing in Step 205. That is, if there is a trigger for starting the control after the down control of the engine torque has been finished, the engine torque is estimated in Step 2051. A target command value of the assist clutch transmission torque is calculated in Step 2052. The torque transmission based on slipping of the assist clutch 25 is carried out in Step 2053. If predetermined torque transmission is carried out, a low-speed-side dog clutch is released from engagement, and transmission torque control for the assist clutch 25 is carried out.

If the processing for controlling the assist clutch 25 during the engagement of the dog clutch is carried out in Step 205, judgement is made in Step 206 as to whether the low-speed-side dog clutch has been released or not. If it is concluded in Step 206 that the low-speed-side dog clutch has been released, processing for controlling the assist clutch 25 during the release of the dog clutch is carried out in Step 207.

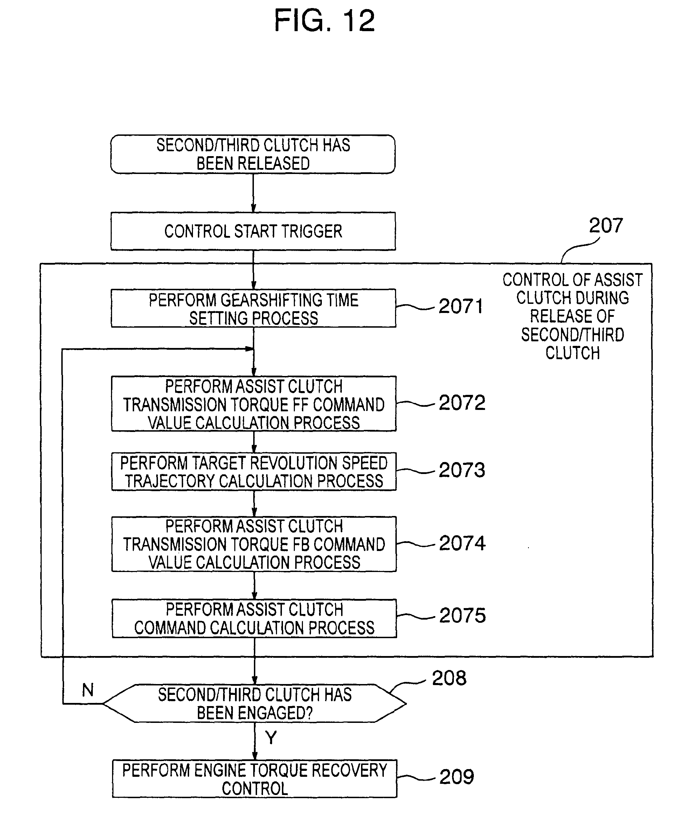

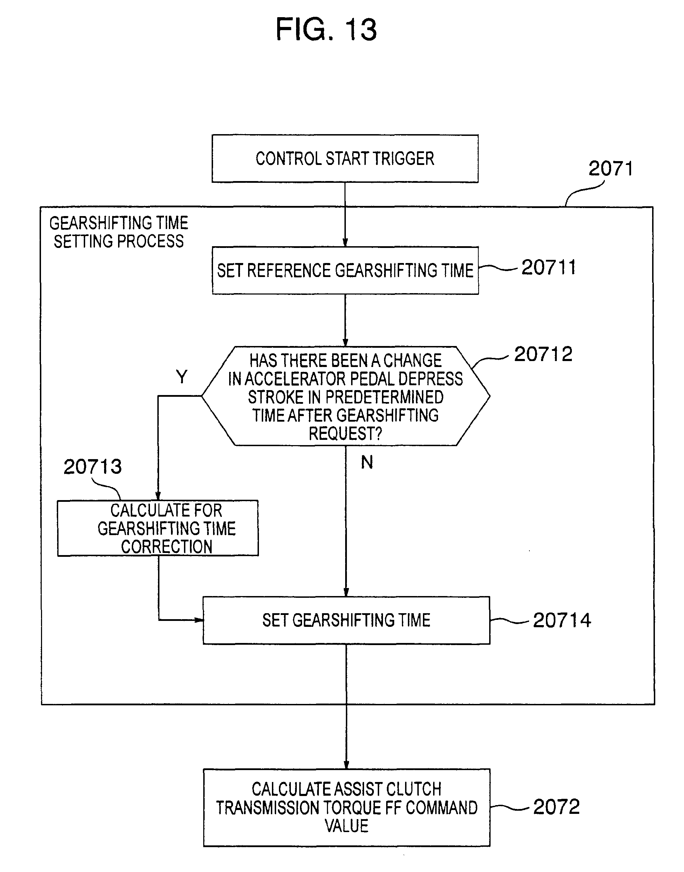

Fig. 12 shows the processing in Step 207. That is, if there is a trigger for starting the control after the dog clutch has been released, processing for setting the gearshifting time (the time between the time at which the assist clutch 25 is engaged and the time at which the assist clutch 25 is released) is carried out in Step 2071 by the gearshifting time setting unit 101 shown in Fig. 2. Fig. 13 shows the details of the gearshifting time setting processing in Step 2071. That is, if there is a trigger for starting the control, reference gearshifting time is set in Step 20711 by the reference gearshifting time setting unit 1011 of the gearshifting time setting unit 101 shown in Fig. 3. When the reference gearshifting time has been set in Step 20711, judgement is made in Step 20712, after a gearshifting request, as to whether a change is caused in accelerator pedal depress stroke in a predetermined time or not. If it is concluded in Step 20712 that a change has been caused in accelerator pedal depress stroke in the predetermined time from issuance of the gearshifting request to the start of gearshifting, a correction value for the gearshifting time is calculated in Step 20713 by the gearshifting time correcting unit 1012 of the gearshifting time setting unit 101 shown in Fig. 3. On the contrary, if it is concluded in Step 20712 that no change is caused in the accelerator pedal depress stroke in the predetermined time from issuance of the gearshifting request to the start of gearshifting, the reference gearshifting time set in Step 20711 is set as the gearshifting time in Step 20714.

When the processing for setting the gearshifting time has been carried out in Step 2071, processing for setting a feed forward command value for the assist clutch transmission torque is carried out in Step 2072 by the assist clutch transmission torque FF command setting unit 102 shown in Fig. 2 of the assist clutch control unit 32.

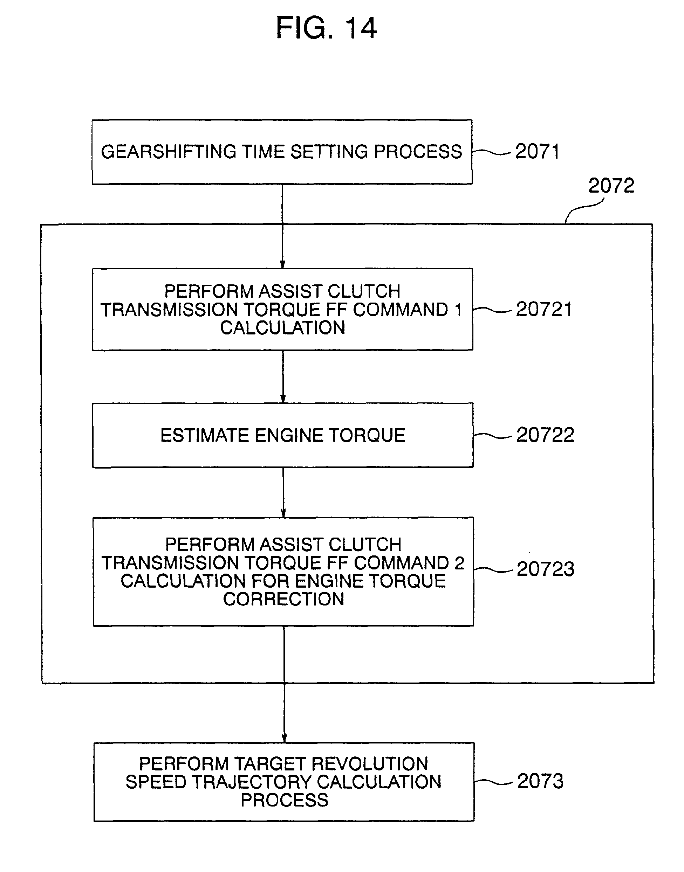

Fig. 14 shows the processing in Step 2072. That is, when the processing for setting the gearshifting time has been carried out, processing for operating an assist clutch transmission torque FF command value 1 is carried out in Step 20712 by the assist clutch transmission torque FF command operation unit A 1021 of the assist clutch transmission torque FF command setting unit 102 shown in Fig. 4.

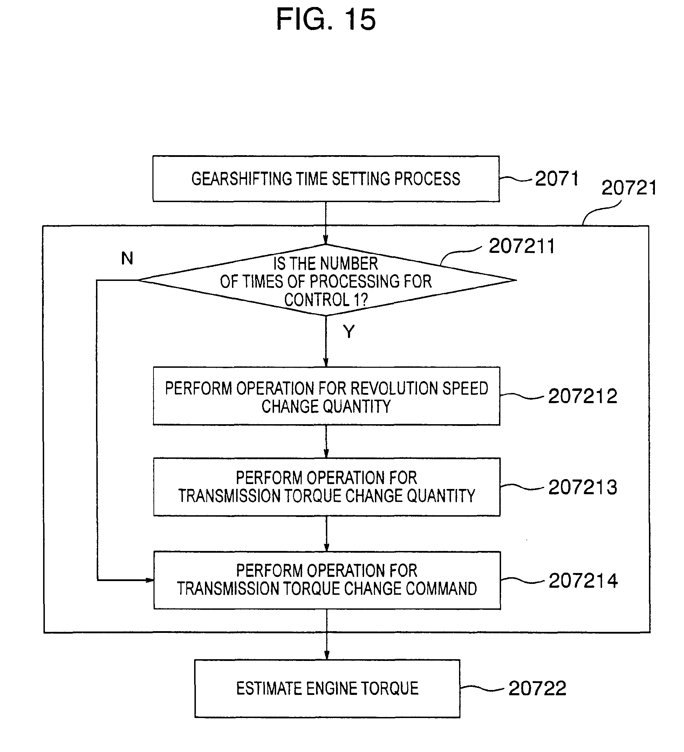

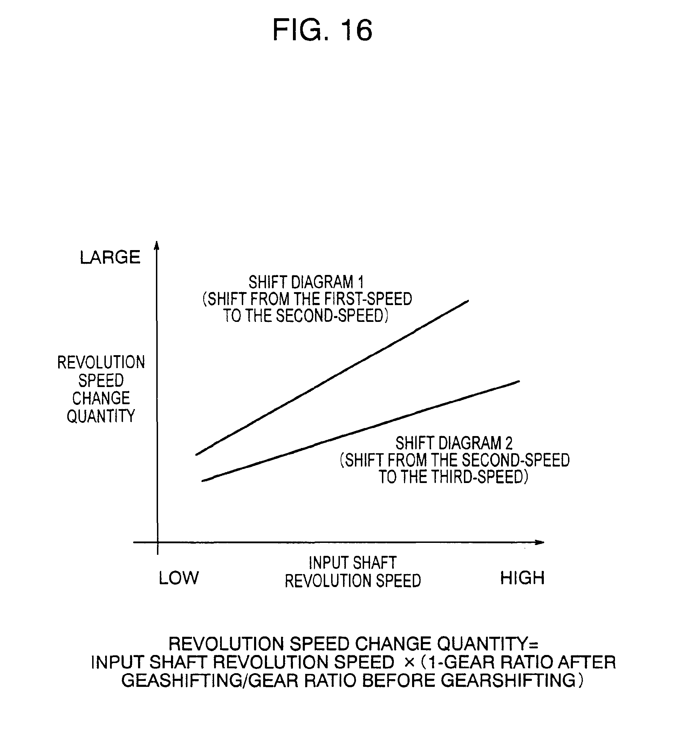

Fig. 15 shows the processing in Step 20721. That is, when the processing for setting the gearshifting time has been carried out in Step 2071, judgement is made in Step 207211 as to whether the number of times of processing for control is one or not. If the number of times of processing for control is not one, the processing moves to Step 207214. If the number of times of processing for control is one, processing for operating the quantity of a change in revolution speed of the input shaft 4 is carried out in Step 207212 on the basis of a characteristic diagram as shown in Fig. 16. The characteristic diagram is based on the revolution speed of the input shaft 4 and the shift diagram (shift from the first-speed to the second-speed, shift from the second-speed to the third-speed, or the like).

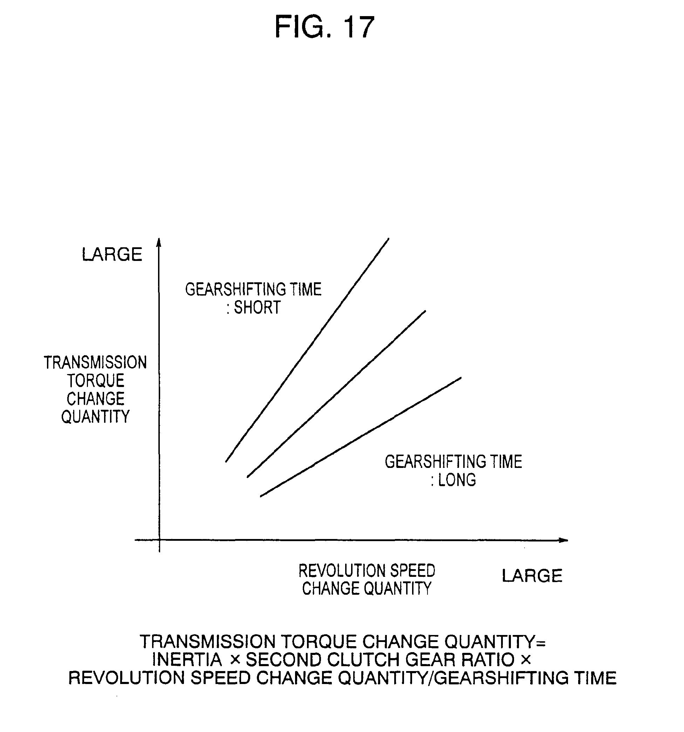

When the processing for operating the quantity of a change in engine speed has been carried out in Step 207212, processing for setting/operating the quantity of a change in assist clutch transmission torque is carried out in Step 207213 by the assist clutch transmission torque change quantity operation unit 10211 of the assist clutch transmission torque FF command operation unit A 1021 shown in Fig. 5. In this processing, the quantity of a change in assist clutch transmission torque is obtained on the basis of an assist clutch transmission torque change quantity characteristic diagram as shown in Fig. 17. The characteristic diagram is defined by the gearshifting time with respect to the quantity of a change in revolution speed of the input shaft 4. When the processing for setting/operating the assist clutch transmission torque change quantity has been carried out in Step 207213, processing for operating a command value for changing the assist clutch transmission torque value is carried out in Step 207214. Then, the processing moves to Step 20722.

When the engine torque has been estimated in Step 20722, processing for operating an assist clutch transmission torque FF command value 2 is carried out in Step 20723. In this processing, the assist clutch transmission torque FF command value 2 is obtained on the basis of the engine torque value by the assist clutch transmission torque FF command operation unit B 1022 of the assist clutch transmission torque FF command setting unit 102 shown in Fig. 4. Then, the processing moves to Step 2073.

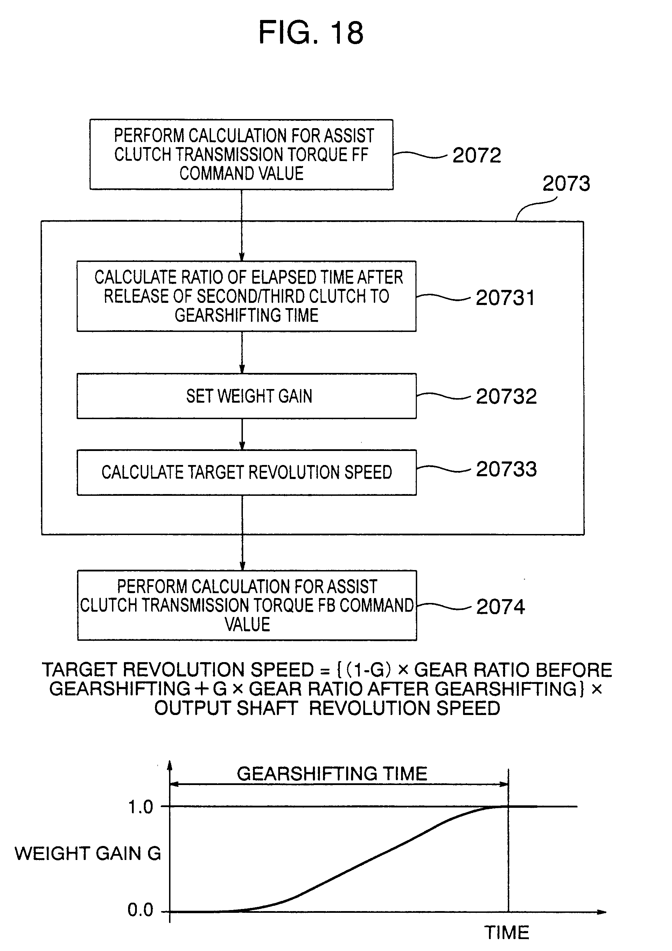

In Step 2073, processing for setting the trajectory of the target revolution speed of the input shaft 4 of the transmission is carried out by the target revolution speed trajectory setting unit 103 shown in Fig. 7. Fig. 18 shows the processing in Step 2073. That is, after the processing for setting the feed forward command value for the assist clutch transmission torque has been carried out in Step 2072, the ratio of the elapsed time after the release of the dog clutch (the second clutch 16 or the third clutch 19) to the gearshifting time is calculated in Step 20731. Then, in Step 20732, a weight gain is set on the basis of a weight-gain relative to gearshifting-time characteristic diagram shown in Fig. 18. When the weight gain has been set in Step 20732, the trajectory of the target revolution speed of the input shaft 4 of the transmission is calculated in Step 20733. Then, the processing moves to Step 2074 in Fig. 12.

When the processing in Step 2073 has been finished, a feedback command value for the assist clutch transmission torque is set in Step 2074 by the assist clutch transmission torque FB command setting unit 104 shown in Fig. 8. When the feedback command value for the assist clutch transmission torque has been set in Step 2074, an assist clutch command value for controlling the assist clutch 25 is calculated in Step 2075. Then, the processing moves to Step 208.

Judgement is made in Step 208 as to whether the engagement of the dog clutch has been completed or not. If it is concluded in Step 208 that the engagement of the dog clutch has not been completed, the processing moves to Step 2072 in Step 207. On the contrary, if it is concluded in Step 208 that the engagement of the dog clutch has been completed, control to recover the engine torque is carried out in Step 209. In the control to recover the engine torque, the assist clutch 25 is released. Here, when the ratio of the revolution speed of the input shaft 4 to the revolution speed of the output shaft 9 becomes equal to the shifted gear ratio, a command for engaging the dog clutch is issued. Thus, the engagement of the dog clutch is controlled.

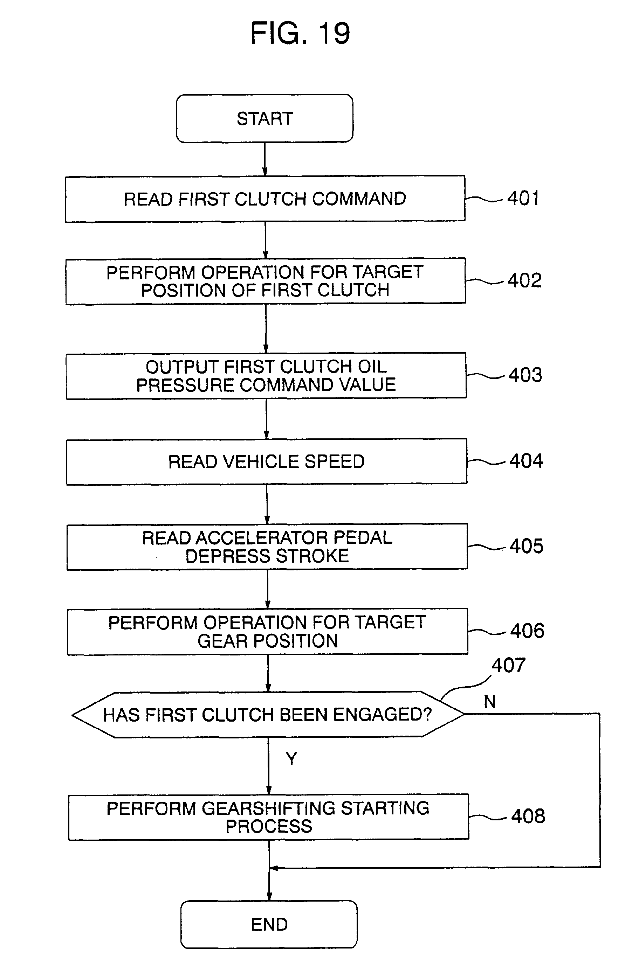

Next, with reference to Fig. 19, description will be made about processing for control without any gearshifting operation by the assist clutch in the case where a gearshifting command is issued in the time between the time at which the engagement of the first clutch is started and the time at which the engagement is completed, at the start of the vehicle.

In Fig. 19, during the start operation of the vehicle, a command value for engaging the first clutch (start clutch) 3 is read in Step 401. In Step 402, a target position of the first clutch 3 is calculated on the basis of the first clutch engagement command value read in Step 401. In Step 403, a command value for the oil pressure of the actuator for driving the first clutch 3 is issued on the basis of the target position calculated in Step 402. Thus, the position of the first clutch 3 is controlled so that the first clutch is controlled at the start of the vehicle.

When the oil pressure command value is issued in Step 403, the vehicle speed is read in Step 404. In step 405, the accelerator pedal depress stroke is read. A target gear position is calculated on the basis of the vehicle speed and the accelerator pedal depress stroke, and judgement is made as to whether gearshifting is to be carried out or not. In Step 406, judgement is made as to whether the engagement of the first clutch 3 has been completed or not. If it is concluded in Step 406 that the engagement of the first clutch 3 is not yet completed, processing for gearshifting is not carried out even through it is concluded that gearshifting is to be carried out. Then, control for the first clutch at the start of the vehicle is carried out. On the contrary, if it is concluded in Step 407 that the engagement of the first clutch 3 has been completed, processing for starting the gearshifting is carried out in Step 408.

With such a configuration, in the case where the accelerator pedal is depressed during gearshifting, the gearshifting can be carried out in a shorter time than an ordinary gearshifting time. Thus, a request of the driver for acceleration can be satisfied without making the driver feel a lack of anticipated response to accelerator operation.

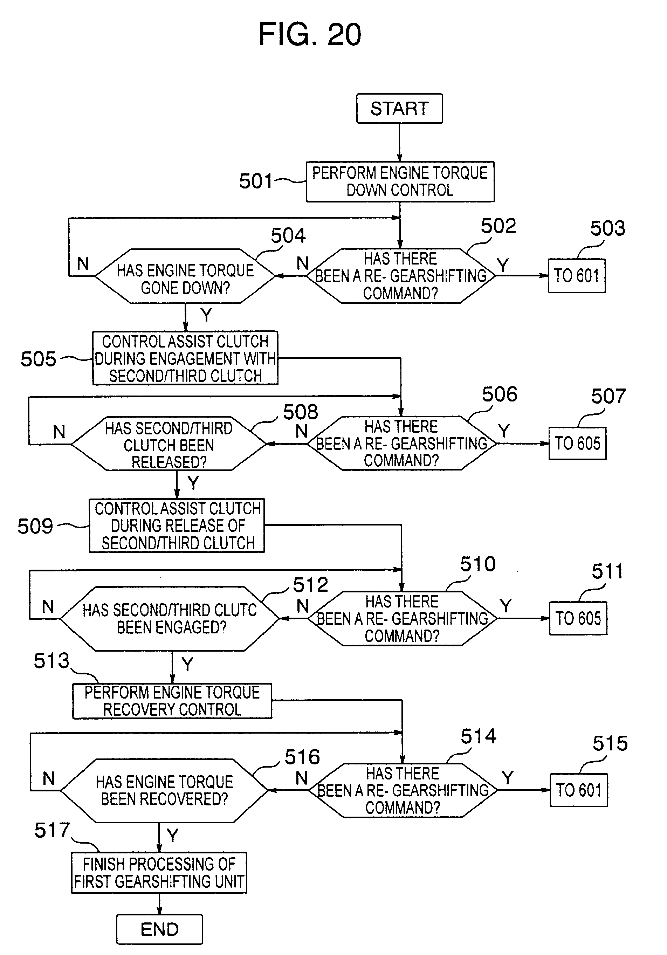

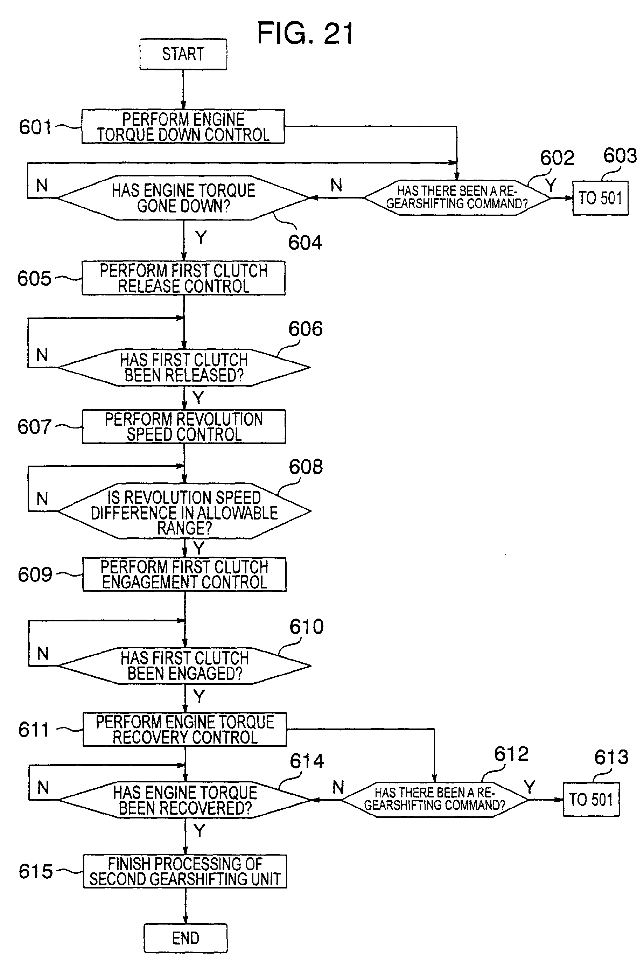

Next, with reference to Figs. 20 and 21, description will be made about control for the automatic transmission in which engagement with an optimum gear is carried out immediately so as to bring the vehicle into an optimum driving state immediately in the case where the driver steps up on the accelerator or releases the accelerator during the control of a current gearshifting so as to cross a gearshifting line in a shift diagram. In this case, a re-gearshifting command is generated for changing to another appropriate gear ratio during the current gearshifting operation.

In Fig. 20, down control of the engine torque is carried out in Step 501. Then, judgement is made in Step 502 as to whether there has been a re-gearshifting command or not. If it is concluded in Step 502 that there has been a re-gearshifting command, the processing moves to Step 601 through Step 503.

On the contrary, if it is concluded in Step 502 that there has been no re-gearshifting command, judgement is made in Step 504 as to whether the down control of the engine torque has been finished or not. If it is concluded in Step 504 that the down control of the engine torque has not been finished, the processing returns to Step 502. On the contrary, if it is concluded in Step 504 that the down control of the engine torque has been finished, processing for controlling the assist clutch 25 during the engagement of the second/third clutch is carried out in Step 505.

After that, in Step 506, judgement is made as to whether there has been a re-gearshifting command or not. If it is concluded in Step 506 that there has been a re-gearshifting command, the processing moves to Step 605 through Step 507.

On the contrary, if it is concluded in Step 506 that there has been no re-gearshifting command, judgement is made in Step 508 as to whether the second/third clutch has been released or not. If it is concluded in Step 508 that the second/third clutch has not been released, the processing returns to Step 506. On the contrary, if it is concluded in Step 508 that the second/third clutch has been released, processing for controlling the assist clutch 25 during the release of the second/third clutch is carried out in Step 509.

After that, in Step 510, judgement is made as to whether there has been a re-gearshifting command or not. If it is concluded in Step 510 that there has been a re-gearshifting command, the processing moves to Step 605 through Step 511. On the contrary, if it is concluded in Step 510 that there has been no re-gearshifting command, judgement is made in Step 512 as to whether the engagement of the second/third clutch has been completed or not. If it is concluded in Step 512 that the engagement of the second/third clutch has not been completed, the processing returns to Step 510. On the contrary, if it is concluded in Step 512 that the engagement of the second/third clutch has been completed, processing for control to recover the engine torque is carried out in Step 513.

After that, in Step 514, judgement is made as to whether there has been a re-gearshifting command or not. If it is concluded in Step 514 that there has been a re-gearshifting command, the processing moves to Step 601 through Step 515. On the contrary, it is concluded in Step 514 that there has been no re-gearshifting command, judgement is made in Step 516 as to whether the processing for control to recover the engine torque has been completed or not. If it is concluded in Step 516 that the processing for control to recover the engine torque has not been finished, the processing returns to Step 514. On the contrary, if it is concluded in Step 516 that the processing for control to recover the engine torque has been finished, the processing of the first gearshifting unit is completed in Step 517. Thus, the flow is terminated.

If it is concluded in Step 502 that there has been a re-gearshifting command, or if it is concluded in Step 514 that there has been a re-gearshifting command, down control of the engine torque is carried out in Step 601 as shown in Fig. 21. When the down control of the engine torque has been carried out in Step 601, judgement is made in Step 602 as to whether there has been a re-gearshifting command or not. If it is concluded in Step 602 that there has been a re-gearshifting command, the processing moves to Step 501 through Step 603. On the contrary, if it is concluded in Step 602 that there has been no re-gearshifting command, judgement is made in Step 604 as to whether the down control of the engine torque has been finished or not. If it is concluded in Step 604 that the down control of the engine torque has not been finished, the processing returns to Step 602. On the contrary, if it is concluded in Step 604 that the down control of the engine torque has been finished, control for releasing the first clutch (start clutch) 3 is carried out in Step 605.

When the control for releasing the first clutch 3 has been carried out in Step 605, judgement is made in Step 606 as to whether the first clutch 3 has been released or not. If it is concluded in Step 606 that the first clutch 3 has been released, the engine speed is controlled in Step 607. When the revolution speed of the input shaft 4 of the transmission has been controlled in Step 607, judgement is made in Step 608 as to whether the difference between the revolution speed of the input shaft 4 of the transmission and the aimed revolution speed thereof is in an allowable range or not. If it is concluded in Step 608 that the difference in revolution speed is in the allowable range, control for engaging with the first clutch (start clutch) 3 is carried out in Step 609.

When the control for engaging with the first clutch (start clutch) 3 has been carried out in Step 609, judgement is made in Step 610 as to whether the control for engaging with the first clutch (start clutch) 3 has been finished or not. If it is concluded in Step 610 that the control for engaging with the first clutch (start clutch) 3 has been finished, control for recovering the engine torque is carried out in Step 611. Then, in Step 612, judgement is made as to whether there has been a re-gearshifting command or not.

If it is concluded in Step 612 that there has been a re-gearshifting command, the processing moves to Step 501 through Step 613. On the contrary, if it is concluded in Step 612 that there has been no re-gearshifting command, judgement is made in Step 614 as to whether the control for recovering the engine torque has been finished or not. If it is concluded in Step 614 that the control for recovering the engine torque has not been finished, the processing returns to Step 612. On the contrary, if it is concluded in Step 614 that the control for recovering the engine torque has been finished, the processing of the second gearshifting unit is completed in Step 615. Thus, the flow is terminated.

By such control, the driver steps up on the accelerator or releases the accelerator during the control of gearshifting so as to cross a gearshifting line in a shift diagram. In such a case, engagement with an optimum gear is carried out immediately so that the vehicle can be shifted into an optimum driving condition immediately.

According to the present invention, it is possible to moderate a shock generated when a clutch is engaged or released during gearshifting.

In addition, according to the present invention, it is possible to satisfy a request of a driver for acceleration without giving the driver a feeling of stretchness or stumble during gearshifting. Furtehr, according to the present invention, when the driver steps up on the accelerator or releases the accelerator during the control of gearshifting so as to cross a gearshifting line in a shift diagram, engagement with an optimum gear is carried out immediately so that the vehicle can be shifted into an optimum driving condition immediately.

## Claims

1. A method of controlling an automatic transmission wherein a plurality of torque transmission means (25, 16, 19) are provided between an input shaft (4) and an output shaft (9) of a gear-drive transmission, and at least one gear ratio of said torque transmission means is formed by a friction clutch (25) while the other gear ratios of said torque transmission means are formed by dog clutches (16, 19); said method comprising the steps of:
controlling said friction clutch (25) when gearshifting is carried out from one gear ratio to another gear ratio; and
controlling gearshifting time to be shorter when a depress stroke of an accelerator pedal increases after a gearshifting start request, then that when said depress stroke of said accelerator pedal is fixed.

2. A method of controlling an automatic transmission wherein a plurality of torque transmission means (25, 16, 19) is provided between an input shaft (4) and an output shaft (9) of a gear-drive transmission, and at least one gear ratio of said torque transmission means is formed by a friction clutch (25) while the other gear ratios of said torque transmission means are formed by dog clutches (16, 19), said method comprising the steps of:
controlling said friction clutch (25) when gearshifting is carried out from one gear ratio to another gear ratio; and
controlling gearshifting time in accordance with revolution speed of said input shaft (4) at the time of a gearshifting start request.

3. A method of controlling an automatic transmission wherein a plurality of torque transmission means (25, 16, 19) is provided between an input shaft (4) and an output shaft (9) of a gear-drive transmission, and at least one gear ratio of said torque transmission means is formed by a friction clutch (25) while the other gear ratios of said torque transmission means are formed by dog clutches (16, 19), said method comprising the steps of:
controlling said friction clutch (25) when gearshifting is carried out from one gear ratio to another gear ratio; and
setting gearshifting time on the basis of a depress stroke of an accelerator pedal and revolution speed of said input shaft (4) when said depress stroke of said accelerator pedal changes after a gearshifting start request.

4. A controller for an automatic transmission having a plurality of torque transmission means (25, 16, 19) provided between an input shaft (4) and an output shaft (9) of a gear-drive transmission wherein at least one gear ratio of said torque transmission means is formed by a friction clutch (25) while the other gear ratios of said torque transmission means are formed by dog clutches (16, 19), and said friction clutch (25) is controlled when gearshifting is carried out from one gear ratio to another gear ratio, said controller comprising:
accelerator pedal depress stroke detecting means (22) for detecting a depress stroke of an accelerator pedal;
an input shaft revolution speed sensor (20) for detecting revolution speed of said input shaft (4); and
gearshifting time setting means (101) for setting gearshifting time on the basis of said depress stroke of said accelerator pedal supplied from said acceleartor pedal depress stroke detecting means (22) and said revolution speed of said input shaft (4);
wherein, when said depress stroke of said accelerator pedal supplied from said accelerator pedal depress stroke detecting means (22) changes during gearshifting, said gearshifting time is set on the basis of said depress stroke of said accelerator pedal and said revolution speed of said input shaft (4).

5. A method of controlling an automatic transmission wherein a plurality of torque transmission means (25, 16, 19) is provided between an input shaft (4) and an output shaft (9) of a gear-drive transmission, and at least one gear ratio of said torque transmission means is formed by a friction clutch (25) while the other gear ratios of said torque transmission means are formed by dog clutches (16, 19), said method comprising the steps of:
controlling said friction clutch (25) when gearshifting is carried out from one gear ratio to another gear ratio; and
controlling said friction clutch (25) on the basis of a difference between revolution speed of said input shaft (4) and a target revolution speed trajectory of said revolution speed of said input shaft (4).

6. A controller for an automatic transmission having a plurality of torque transmission means (25, 16, 19) provided between an input shaft (4) and an output shaft (9) of a gear-drive transmission wherein at least one gear ratio of said torque transmission means is formed by a friction clutch (25) while the other gear ratios of said torque transmission means are formed by dog clutches (16, 19), and said friction clutch (25) is controlled when gearshifting is carried out from one gear ratio to another gear ratio, said controller comprising:
revolution speed change trajectory setting means (103) for setting a target revolution speed trajectory of revolution speed of said input shaft (4) during gearshifting, on the basis of predetermined gearshifting time;
engine torque detecting means for estimating or detecting torque of an engine (1);
an input shaft revolution speed sensor (20) for detecting said revolution speed of said input shaft(4);
feed forward command value setting means (102) for setting a command value for said friction clutch (25) on the basis of said revolution speed of said input shaft (4) supplied from said input shaft revolution speed sensor (20); and
feedback command setting means (104) for setting a command for said friction clutch (25) on the basis of a deviation value between said target revolution speed trajectory and said revolution speed of said input shaft (4).

7. A method of controlling an automatic transmission having an input clutch (3) for transmitting driving force of an engine to an input shaft (4) of a gear-drive transmission, a plurality of torque transmission means (25, 16, 19) provided between said input shaft (4) and an output shaft (9) of said gear-drive transmission wherein at least one gear ratio of said torque transmission means is formed by a friction clutch (25) while the other gear ratios of said torque transmission means are formed by dog clutches (16, 19) said method comprising the steps of:
controlling said friction clutch (25) when gearshifting is carried out from one gear ratio to another gear ratio; and
preventing an engagement operation of said friction clutch (25) till engagement of said input clutch (3) is completed after said engagement of said input clutch (3) is started.

8. A method of controlling an automatic transmission having a plurality of torque transmission means (25, 16, 19) between an input shaft (4) and an output shaft (9) of a gear-drive transmission, wherein at least one gear ratio of said torque transmission means is formed by a friction clutch (25) while the other gear ratios of said torque transmission means are formed by dog clutches (16, 19), said method comprising the steps of:
controlling said friction clutch (25) when gearshifting is carried out from one gear ratio to another gear ratio; and
carrying out a gearshifting operation to a gear ratio corresponding to a new gearshifting command after a gearshifting operation to said gear ratio is started in response to a gear shifting command, when said new gearshifting command to another gear ratio is issued before said gearshifting operation is completed.

9. A method of controlling an automatic transmission having a plurality of torque transmission means (25, 16, 19) between an input shaft (4) and an output shaft (9) of a gear-drive transmission wherein at least one gear ratio of said torque transmission means is formed by a friction clutch (25) while the other gear ratios of said torque transmission means are formed by dog clutches (16, 19), said method comprising the steps of:
controlling said friction clutch (25) when gearshifting is carried out from one gear ratio to another gear ratio; and
carrying out a gearshifting operation to a gear ratio corresponding to a new gearshifting command, after a gearshifting operation to said gear ratio is started in response to a gearshifting command, when said new gearshifting command to another gear ratio is issued before said gearshifting operation is completed, either a gearshifting method making use of said friction clutch (25) or a gearshifting method making no use of said friction clutch (25) is selected in accordance with conditions during said gearshifting operation.
